# EUROPÄISCHE PATENTSCHRIFT

(11) **EP 1 088 720 B1**
(45) Veröffentlichungstag und Bekanntmachung des Hinweises auf die Patenterteilung: **26.10.2005**
(21) Anmeldenummer: 00117075.2
(22) Anmeldetag: 09.08.2000
(51) Int. Cl.: B60S 1/50, F04D 29/70

(54) **Zur Montage strömungsseitig vor einer Pumpe einer Scheibenreinigungsanlage eines Kraftfahrzeuges vorgesehener Filter**
Filter to be mounted upstream of a pump of a vehicle window cleaning unit
Filtre pour montage en amont d'une pompe d'une unité de lavage de vitres de véhicule

(30) Priorität: 29.09.1999 DE 19946551
(43) Veröffentlichungstag der Anmeldung: 04.04.2001
(73) Patentinhaber: SIEMENS AKTIENGESELLSCHAFT, 80333 München (DE)
(72) Erfinder: Goldbach, Matthias, 36179 Bebra (DE); Mainz, Karl, 36179 Bebra (DE)

(56) Entgegenhaltungen:
- CH-A- 498 642
- DE-A- 2 627 283
- DE-A- 3 709 926
- DE-A- 19 702 705
- DE-U- 9 319 243
- GB-A- 1 078 958
- US-A- 3 850 813
- US-A- 4 411 788
- US-A- 4 743 496
- US-A- 4 851 118
- US-A- 5 399 264
- US-A- 5 441 637
- US-A- 5 545 318

## Beschreibung

Die Erfindung betrifft einen zur Montage strömungsseitig vor einer Pumpe einer Scheibenreinigungsanlage eines Kraftfahrzeuges vorgesehenen Filter mit einem Haltebereich zur Befestigung an einem angrenzenden Bauteil mit einem Dichtbereich zur Abdichtung gegenüber dem angrenzenden Bauteil und mit einem Filterbereich zum Filtern von Scheibenreinigungsflüssigkeit.

Solche Filter werden in heutigen Scheibenreinigungsanlagen meist unmittelbar auf einen Ansaugstutzen der Pumpe aufgesteckt und zwischen der Pumpe und einem Vorratsbehälter für Scheibenreinigungsflüssigkeit eingespannt und sind aus der Praxis bekannt. Der Haltebereich ist dabei flanschförmig zwischen dem Vorratsbehälter und der Pumpe angeordnet, während der Dichtbereich an dem Ansaugstutzen und dem Vorratsbehälter anliegt. Hierdurch läßt sich die Pumpe außerhalb des Vorratsbehälters anordnen, wobei der Ansaugstutzen in den Vorratsbehälter hineinragt. Der Filterbereich weist hierbei eine Vielzahl von Ausnehmungen als Durchlaß für die Scheibenreinigungsflüssigkeit auf. Der bekannte Filter wird einteilig in einer Spritzgußform aus dem gummielastischen Material EPDM gefertigt.

Nachteilig bei dem bekannten Filter ist, daß die Ausnehmungen für den Filterbereich sehr schwierig zu fertigen sind, da für jede der Ausnehmungen ein auf einem Spritzgußformteil angeordneter Stift erforderlich ist. Die Stifte werden bei der Herstellung gegen ein gegenüberliegendes Spritzgußformteil gedrückt. Zur Aufnahme der hierbei entstehenden mechanischen Belastungen benötigen die Stifte einen großen Durchmesser. Dies führt jedoch zu sehr großen Ausnehmungen in dem Filterbereich und damit zu einer geringen Filterwirkung. Durch die geringe Filterwirkung des Filters können Waschdüsen der Scheibenreinigungsanlage verstopft werden.

Des Weiteren Offenbart das Dokument DE-A-3709926 einen Filter zur Montage an einem Behälter vor einer Pumpe, der eine aus einem gummielastischen Material gefertigte Einheit mit zwei Dichtbereichen aufweist wobei ein den Filterbereich bildendes Einlegeteil formschlüssig in der Einheit gehalten ist.

Der Erfindung liegt das Problem zugrunde, einen Filter der eingangs genannten Art so zu gestalten, daß er kostengünstig herstellbar ist und eine hohe Filterleistung ermöglicht.

Dieses Problem wird erfindungsgemäß durch die Merkmale des kennzeichnenden Teils des Anspruchs 1 gelöst.

Durch diese Gestaltung läßt sich der Dichtbereich aus einem stabilen, leicht zu verarbeitenden Material in einer fertigungstechnisch einfachen Form herstellen. Bei dem Einlegeteil der den Filterbereich aufweist kann es sich beispielsweise um ein zunächst ebenes Filtergewebe oder um ein Sieb handeln. Der erfindungsgemäße Filter gestaltet sich damit besonders kostengünstig. Da man das Einlegeteil beispielsweise im Webverfahren fertigen kann, läßt sich eine besonders hohe Filterwirkung erreichen.

Zur Verringerung der Fertigungskosten des erfindungsgemäßen Filters trägt es bei, dass das Einlegeteil stoffschlüssig mit einer einstückigen, aus einem gummielastischem Material gefertigten Einheit aus Dichtbereich und Haltebereich verbunden ist.

Der Filterbereich läßt sich gemäß einer anderen vorteilhaften Weiterbildung der Erfindung mit besonders großen Abmessungen versehen, wenn das Einlegeteil topfförmig gestaltet ist. Der Filterbereich läßt sich hierdurch auf nahezu der gesamten Mantelfläche und auf der Stirnseite des Einlegeteils anordnen. Durch die großen Abmessungen können die Durchlässe für Scheibenreinigungsflüssigkeit in dem Filterbereich besonders klein gestaltet sein, ohne daß ein starker Druckabfall zu erwarten ist. Eine Verstopfung von Düsen der Scheibenreinigungsanlage läßt sich hierdurch vermeiden.

Ein Ansaugen des Filterbereichs durch die Pumpe läßt sich gemäß einer anderen vorteilhaften Weiterbildung der Erfindung einfach vermeiden, wenn das Einlegeteil Versteifungsrippen und/oder Versteifungsringe aufweist.

Zur weiteren Verringerung der Fertigungskosten des erfindungsgemäßen Filters trägt es bei, wenn die Versteifungsrippen und die Versteifungsringe einstückig mit dem Haltebereich gefertigt sind.

Der Filterbereich hat gemäß einer anderen vorteilhaften Weiterbildung der Erfindung eine besonders hohe Stabilität, wenn das Einlegeteil aus Polypropylen gefertigt ist.

Der erfindungsgemäße Filter hat eine hohe Stabilität, wenn einander kreuzende Fasern des Filterbereichs untereinander stoffschlüssig verbunden sind.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in -
- Fig.1: einen erfindungsgemäßen, an einer Pumpe montierten Filter in einem Vorratsbehälter einer Scheibenreinigungsanlage,
- Fig.2: den Filter aus Figur 1 in einer stark vergrößerten perspektivischen Darstellung,
- Fig.3: einen Längsschnitt durch den Filter aus Figur 1.

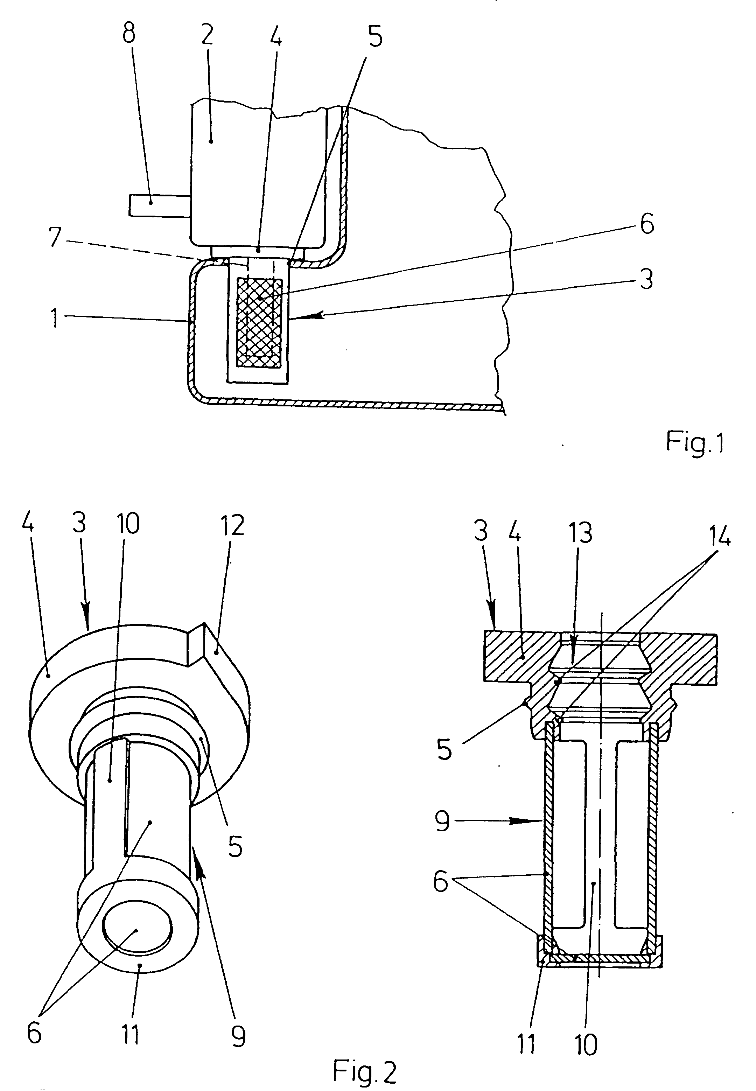

Figur 1 zeigt einen Teilbereich eines Vorratsbehälters 1 für eine Scheibenreinigungsanlage eines Kraftfahrzeuges mit einer Pumpe 2 und einem Filter 3. Zur Verdeutlichung ist der Vorratsbehälter 1 geschnitten dargestellt. Der Filter 3 weist einen flanschförmigen Haltebereich 4 auf, mit welchem er zwischen einer Wandung des Vorratsbehälters 1 und der Pumpe 2 eingespannt ist. In den an dem Vorratsbehälter 1 und der Pumpe 2 anliegenden Bereichen hat der Filter 3 jeweils einen Dichtbereich 5. Weiterhin hat der Filter 3 einen Filterbereich 6, durch den Scheibenreinigungsflüssigkeit hindurchtreten kann. In den Filter 3 ragt ein Ansaugstutzen 7 der Pumpe 2 hinein. Die Pumpe 2 fördert Scheibenreinigungsflüssigkeit aus dem Vorratsbehälter 1 durch den Filterbereich 6 des Filters 3 zu einem Anschlußstutzen 8. Auf den Anschlußstutzen 8 läßt sich eine nicht dargestellte, zu Waschdüsen der Scheibenreinigungsanlage führende Leitung aufstecken.

Figur 2 zeigt den Filter 3 aus Figur 1 in einer stark vergrößerten perspektivischen Darstellung. Hierbei ist zu erkennen, daß der Haltebereich 4 und der Dichtbereich 5 einteilig gefertigt sind. Der Filterbereich 6 ist auf einem mit dem Haltebereich 4 verbundenen Einlegeteil 9 angeordnet. Weiterhin ist der Haltebereich 4 einteilig mit auf dem Filterbereich 6 angeordneten Versteifungsrippen 10 und einem Versteifungsring 11 gefertigt. An dem Haltebereich 4 ist ein Vorsprung 12 angeordnet. Der Vorsprung 12 dient bei der Fertigung als Auswerfer und bei der Montage zur Ausrichtung des Filters 3.

Figur 3 zeigt in einem vergrößerten Längsschnitt durch den Filter 3 aus Figur 1, daß das Einlegeteil 9 von dem Material des Haltebereichs 4, der Versteifungsrippen 10 und des Versteifungsringes 11 umschlossen ist. Bei der Fertigung des Filters 3 im Spritzgußverfahren wird das Einlegeteil 9 mit dem Material des Haltebereichs 4 stoffschlüssig verbunden. Weiterhin zeigt Figur 3, daß auf der radial inneren Seite des Haltebereichs 4 ein weiterer Dichtbereich 13 mit Dichtrippen 14 zur Abdichtung des Filters 3 gegenüber dem in Figur 1 dargestellten Ansaugstutzen 7 angeordnet ist. Der Haltebereich 4 und die Dichtbereiche 5, 13 sind einteilig in einer Spritzgußform aus dem gummielastischen Material EPDM gefertigt. Das Einlegeteil 9 ist aus Polypropylen-Fasern gefertigt, wobei der Filterbereich 6 gewebt ist und sich kreuzende Fasern stoffschlüssig miteinander verbunden sind.

## Patentansprüche

1. Zur Montage strömungsseitig vor einer Pumpe (2) einer Scheibenreinigungsanlage eines Kraftfahrzeuges vorgesehener Filter (3) mit einem Haltebereich (4) zur Befestigung an einem angrenzenden Bauteil, mit einem ersten Dichtbereich (5) zur Abdichtung gegenüber dem angrenzenden Bauteil, mit einem zweiten Dichtbereich (13) zur Abdichtung gegenüber eines Bauteils der Pumpe (2) und mit einem Filterbereich (6) zum Filtern von Scheibenreinigungsflüssigkeit, wobei die Dichtbereiche (5, 13) und der Haltebereich (4) eine einstückige, aus einem gummielastischen Material gefertigte Einheit bilden, **dadurch gekennzeichnet, dass** die Dichtbereiche (5, 13) und der Haltebereich (4) ein den Filterbereich bildendes Einlegeteil (9) unmittelbar haltern und dass der Filterbereich (6) stoffschlüssig mit der Einheit aus den Dichtbereichen (5, 13) und dem Haltebereich (4) verbunden ist.

2. Filter nach Anspruch 1, **dadurch gekennzeichnet, dass** das Einlegeteil (9) topfförmig gestaltet ist.

3. Filter nach Anspruch 1 oder 2, **dadurch gekennzeichnet, dass** das Einlegeteil (9) Versteifungsrippen (10) und/oder Versteifungsringe (11) aufweist.

4. Filter nach Anspruch 1 oder 2, **dadurch gekennzeichnet, dass** die Versteifungsrippen (10) und die Versteifungsringe (11) einstückig mit dem Haltebereich (4) gefertigt sind.

5. Filter nach zumindest einem der vorhergehenden Ansprüche, **dadurch gekennzeichnet , dass** das Einlegeteil (9) aus Polypropylen gefertigt ist.

6. Filter nach zumindest einem der vorhergehenden Ansprüche, **dadurch gekennzeichnet , dass** einander kreuzende Fasern des Filterbereichs (6) untereinander stoffschlüssig verbunden sind.

## Claims

1. Filter (3) intended for fitting upstream of a pump (2) of a motor-vehicle window cleaning unit, comprising a holding region (4) for attachment to an adjacent structural part, comprising a first sealing region (5) for sealing against the adjacent structural part, comprising a second sealing region (13) for sealing against a structural part of the pump (2), and comprising a filter region (6) for filtering of window cleaning fluid, the sealing regions (5, 13) and the holding region (4) forming a one-piece unit made of an elastomeric material, **characterized in that** the sealing regions (5, 13) and the holding region (4) directly secure an insert (9) which forms the filter region, and **in that** the filter region (6) is connected in an integral manner to the unit comprising the sealing regions (5, 13) and the holding region (4).

2. Filter according to Claim 1, **characterized in that** the insert (9) is of pot-shaped configuration.

3. Filter according to Claim 1 or 2, **characterized in that** the insert (9) has stiffening ribs (10) and/or stiffening rings (11).

4. Filter according to Claim 1 or 2, **characterized in that** the stiffening ribs (10) and the stiffening rings (11) are produced in one piece with the holding region (4).

5. Filter according to at least one of the preceding claims, **characterized in that** the insert (9) is made of polypropylene.

6. Filter according to at least one of the preceding claims, **characterized in that** crisscrossing fibres of the filter region (6) are joined together in an integral manner.

## Revendications

1. Filtre (3) prévu pour être monté, dans le sens de l'écoulement, en amont d'une pompe (2) d'un système de nettoyage des glaces d'un véhicule automobile, comportant une partie fixation (4), permettant de le fixer à une pièce voisine, une première partie étanchéité (5) permettant d'assurer son étanchéité par rapport à la pièce voisine, une deuxième partie étanchéité (13) permettant d'assurer son étanchéité par rapport à une pièce de la pompe (2) et une partie filtre (6) destinée à filtrer le liquide de nettoyage des glaces, où les parties étanchéité (5, 13) et la partie fixation (4) forment une unité en une seule pièce fabriquée à partir d'une matière première élastique à base de caoutchouc **caractérisé par le fait que** les parties étanchéité (5, 13) et la partie fixation (4) maintiennent directement la pièce d'insertion (9) formant la partie filtre et que la partie filtre (6) est liée par assemblage à fusion de matière à l'unité composée des parties étanchéité (5, 13) et de la partie fixation (4).

2. Filtre selon la revendication 1 **caractérisé par le fait que** la pièce d'insertion (9) est en forme de pot.

3. Filtre selon la revendication 1 ou 2 **caractérisé par le fait que** la pièce d'insertion (9) a des nervures de renforcement (10) et / ou des bagues de renforcement (11).

4. Filtre selon la revendication 1 ou 2 **caractérisé par le fait que** les nervures de renforcement (10) et les bagues de renforcement (11) sont fabriquées en une seule pièce avec la partie fixation (4).

5. Filtre selon au moins l'une des revendications précédentes **caractérisé par le fait que** la pièce d'insertion (9) est fabriquée en polypropylène.

6. Filtre selon au moins l'une des revendications précédentes **caractérisé par le fait que** les fibres de la partie filtre (6) qui se croisent, sont liées l'une à l'autre par assemblage à fusion de matière.
